# EUROPEAN PATENT SPECIFICATION

(11) **EP 3 728 139 B1**
(45) Date of publication and mention of the grant of the patent: **08.11.2023**
(21) Application number: 18815708.5
(22) Date of filing: 12.12.2018
(51) Int. Cl.: C02F 3/34, C02F 101/32, C02F 101/34, C02F 101/38, C02F 103/36

(54) **BIODEGRADATION OF ORGANIC POLLUTANTS BY A HALOPHILIC ARCHAEA**
BIOLOGISCHER ABBAU VON ORGANISCHEN SCHADSTOFFEN DURCH HALOPHILE ARCHAEA
BIODÉGRADATION DE POLLUANTS ORGANIQUES PAR UNE ARCHÉOBACTÉRIE HALOPHILE

(30) Priority: 19.12.2017 EP 17208358
(43) Date of publication of application: 28.10.2020
(73) Proprietor: Covestro Deutschland AG, 51373 Leverkusen (DE)
(72) Inventor: HECKROTH, Heike, 51519 Odenthal (DE); HERWIG, Christoph, 1130 Wien (AT); KAMRAVAMANESH, Donya, 1220 Wien (AT); MAHLER, Nicole, 1050 Wien (AT)
(74) Representative: Levpat
(86) International application number: PCT/EP2018/084479
(87) International publication number: WO 2019/121201

(56) References cited:
- WO-A1-98/13105
- ALSAFADI DIYA ET AL: "A one-stage cultivation process for the production of poly-3-(hydroxybutyrate-co-hydroxyvalerate ) from olive mill wastewater byHaloferax mediterranei", NEW BIOTECHNOLOGY, vol. 34, 17 May 2016 (2016-05-17), pages 47-53, XP029811473, ISSN: 1871-6784, DOI: 10.1016/J.NBT.2016.05.003
- ROSA MARÍA MARTÍNEZ-ESPINOSA ET AL: "Nitrate and nitrite removal from salted water by Haloferax mediterranei", BIOCATALYSIS AND BIOTRANSFORMATION., vol. 25, no. 2-4, 1 January 2007 (2007-01-01), pages 295-300, XP055451621, GB ISSN: 1024-2422, DOI: 10.1080/10242420701422781
- SYLVIE LE BORGNE ET AL: "Biodegradation of Organic Pollutants by Halophilic Bacteria and Archaea", JOURNAL OF MOLECULAR MICROBIOLOGY AND BIOTECHNOLOGY, vol. 15, no. 2-3, 1 January 2008 (2008-01-01), pages 74-92, XP055451697, GB ISSN: 1464-1801, DOI: 10.1159/000121323

## Description

The present invention relates to a method for reducing the content of at least one pollutant selected from the group consisting of nitrobenzene, formate, phenol, 4,4'-Methylenedianiline (MDA) and aniline in hypersaline wastewater, whereby said wastewater has been derived from the production of diarylcarbonate, the production of polycarbonates or the production of diamines and polyamides of the diphenylmethane series and whereby said hypersaline wastewater comprises NaCl in a concentration of at least 6% (w/v) up to 25% (w/v) based upon the total volume of the hypersaline wastewater, said method comprising the steps of (a) providing a composition A comprising hypersaline wastewater and said at least one pollutant;
(b) contacting composition A with Haloferax mediterranei cells, thereby generating a composition B comprising said composition A and Haloferax mediterranei cells; and (c) incubating composition B, thereby reducing the content of said at least one pollutant.

The present invention further concerns a method for the production of chlorine and sodium hydroxide. Further encompassed by the present invention is a composition comprising hypersaline wastewater, said at least one pollutant, and Haloferax mediterranei cells.
Industrial processes generate millions of liters of highly saline residual water. It has been estimated that 5 % of the total world effluents are highly saline.

For example, the production of diamines and polyamines from the diphenylmethane series which are major intermediates for the production polyurethane is accompanied by the generation of large amounts of hypersaline wastewater (see US2009240076). Di- and polyamines of the diphenylmethane series are usually produced by reacting aniline and formaldehyde in the presence of acid catalysts such hydrochloric acid. After producing the diamines and polyamines from the diphenylmethane series, the acid catalyst is neutralized by addition of a base, typically aqueous sodium hydroxide. In general, the addition of the neutralizing agent is carried out so that the resulting neutralization mixture can be separated into an organic phase containing the polyamines of the diphenylmethane series and excess aniline and an aqueous phase containing sodium chloride together with residual organic constituents (i.e. hypersaline wastewater). In the past, hypersaline wastewaters frequently were disposed after removal of organic constituents by physical and/or chemical methods for example adsorption, ozonation and electrochemical treatment see US2009240076.

However, physical and/or chemical methods that are used to treat residual water containing organic compounds, are often not able to reduce the total organic carbon content in the salty residual streams down to the required maximum level. The residual waters (such as the wastewater from production of di- and polyamines of the diphenylmethane series) often comprise organic pollutants such as formate, phenol, aniline, nitrobenzene and 4,4'-Methylenedianiline (MDA) and are either brought into the environment after considerable dilution with fresh water or they are treated by physico-chemical methods. Thus, alternative treatment options for hypersaline wastewater are required.

Alternative systems for the treatment of organic matter by aerobic and anaerobic biological treatments are currently a major research focus. Conventional non-extremophilic microorganisms are not able to perform the removal of organic pollutants at high salt concentrations. The ability of halophilic bacteria to degrade or transform different organic pollutants in the presence of high salt concentrations when salt stress is superimposed on pollution stress is of great importance. Thus, microorganisms which are able to grow at high salt concentrations and are able to degrade or transform different organic pollutants in hypersaline wastewater are highly needed.

Typical organic pollutants found in hypersaline wastewater are formate, phenol, aniline, nitrobenzene and 4,4'-Methylenedianiline (MDA). These chemical intermediates are often used in the manufacturing of herbicides, developers, perfumes, medicine, rubber and dyes.

Due to their expanded use in industry, growing amounts of these compounds are being released into the soil and water bodies which poses an environmental threat and health risk to living organisms.

Moreover, hypersaline solutions are an important material for the chloralkali process which is an industrial process for the electrolysis of sodium chloride (NaCl). It is the technology used to produce chlorine and sodium hydroxide. However, very pure hypersaline solutions are needed. Therefore, it is difficult to use recycled hypersaline wastewater for the chloralkali process. For example, hypersaline wastewater from methylene diamine production contains organic pollutants such as formate, phenol, aniline, nitrobenzene and 4,4'-Methylenedianiline (MDA) which shall be removed prior to subjecting the wastewater to the chloralkali process. E.g., formate which has to be removed, otherwise chlorine will be contaminated with CO₂.

Previous studies on biodegradation of organic compounds such as formate or aniline focused on the degradation or transformation of single compounds under moderate conditions. However, microorganisms that are able to simultaneously degrade a variety of organic compounds such as formate, phenol, aniline, MDA and nitrobenzene in the presence of high salt concentration, e.g. up to 2000 mg/l NaCl, are currently unknown.

For example, biodegradation of aniline and/or formate has previously been reported to be degraded by various bacterial species of Pseudomonas, Comamonas, Acinetobacter, Rhodococcus, Frateuria, Moraxella, Delftia, Nocardia and Dietzia under moderate conditions. However, residual streams containing aniline and/or formate and potentially further organic pollutants such as nitrobenzene, phenol and/or MDA frequently have elevated salinity and treatment of hypersaline residual streams represents a challenge since high salt concentration disrupts bacteria metabolism present in normal biological treatment systems. Also using normal bacteria for hypersaline residual streams requires prior dilutions to lower salinity with fresh water if available at all.

WO 2013/124375 discloses the reduction of total organic carbon by certain halophilic and/or haloalkaliphilic microorganisms.

Woolard and Irvine (1995) disclose the treatment of hypersaline wastewater in the sequencing batch reactor (Woolard and Irvine. Treatment of hypersaline wastewater in the sequencing batch reactor. Water Research 29.4 (1995): 1159-1168).

Rodriguez-Valeria et al., 1983 reported the identification of *Halobacterium mediterranei*, a new species of a carbohydrate-utilizing extreme halophile. *Halobacterium mediterranei* was shown to be able to use many different compounds as sole sources of carbon and energy and does not produce H₂S.

Campo et al. (2011) is concerned with an activated sludge from soil contaminated with aromatic compounds. Aerobic biodegradation of amines such as aniline and MDA was observed up to 5 mg/l aniline (Campo, P, et al. Aerobic biodegradation of amines in industrial saline wastewaters. Chemosphere 85.7 (2011): 1199-1203).

Antón et al. (1988) reported the production of an extracellular polysaccharide by *Haloferax mediterranei.* The authors showed that *Haloferax mediterranei* is able to produce an exocellular polymeric substance, in particular a heteropolysaccharide containing mannose as the major component, that gives the colonies a typical mucous character. The substance was produced under several conditions and substrates assayed, although the highest yields were obtained with sugars, particularly glucose, as carbon and energy source (Antón, J et al.. Production of an extracellular polysaccharide by Haloferax mediterranei. Applied and Environmental Microbiology 54.10 (1988): 2381-2386).

Oren (2000) deals with the halophilic bacteria. The author referred to the potential use of Haloferax species for the production of poly-beta hydroxyalkanoate or extracellular polysaccharides. In particular, it was reported that beta-hydroxyalkanoate, as a source of biologically degradable plastic material, can be obtained in a high yield from the halophilic Archaeon *Haloferax mediterranei.* Moreover, *Haloferax mediterranei* can accumulate as much beta-hydroxyalkanoate as *Ralstonia,* and can use starch as a cheap carbon and energy source (Oren, A. Diversity of halophilic microorganisms: environments, phylogeny, physiology, and applications."Journal of Industrial Microbiology and Biotechnology 28.1 (2002): 56-63).

Oren et al (2014) further reported that *Haloferax mediterranei* is metabolically very versatile and has a wide salt tolerance. According to the authors *Haloferax mediterranei* is an archaeon that grows faster than any other, comparable extreme halophile, has a wide window for salt tolerance, can grow on simple as well as on complex substrates and degrade polymeric substances, has different modes of anaerobic growth, can accumulate storage polymers, produces gas vesicles, and excretes halocins capable of killing other Archaea (Oren, A et al.. Microbial weeds in hypersaline habitats: the enigma of the weed-like Haloferax mediterranei. FEMS microbiology letters 359.2 (2014): 134-142).

Rosa Maria Martinez Espinoza et al. (2007) reported the removal of inorganic nitrogen by *Haloferax mediterranei* cells (see Rosa Maria Martinez Espinoza et al., Biocatalysis and Biotransformation, vol. 25, no. 2-4, 1 January 2007, pp. 295-300).

Despite many reports concerning the microbial degradation of aromatic compounds, degradation of organic pollutants at high salt concentrations is still limited. Therefore, microorganisms which degrade or transform organic pollutants in the presence of high salt concentrations when salt stress is superimposed on pollution stress are of great importance. In particular, means and methods for reducing in hypersaline wastewaters the content of nitrobenzene, formate, phenol, 4,4'-Methylenedianiline (MDA) and/or aniline are highly required.

The archaeal strain Haloferax mediterranei DSM.1411 is reported for metabolic versatility, probably using a large range of single carbon sources. It has been reported that Haloferax mediterranei DSM.1411 can use wide range of sugars, organic acids and glycerol as well as some amino acids as substrates that facilitate biomass growth when present as the sole carbon source. The strain has also been used to remove nitrate and nitrite for water bioremediation processes. However there exists no single report for the ability of this strain to grow in hypersaline wastewater, nor the degradation of the substrates formate, phenol, aniline, nitrobenzene and/or 4,4'-Methylenedianiline (MDA) under high saline conditions.

The technical problem underlying the present invention can be seen as the provision of methods for complying with the aforementioned needs. The technical problem is solved by the embodiments characterized in the claims and herein below.

Advantageously, it has been found in the studies of the present invention that Haloferax mediterranei DSM.1411 efficiently degrades different pollutants under conditions of high salinity. In particular, it has been shown that pollutants such as formate, phenol, nitrobenzene, aniline and 4,4'-methylenedianiline (MDA) could by degraded by Haloferax mediterranei DSM.1411.

The findings of the present inventions are surprising. E.g., up to date there are no reports on biological degradation of Nitrobenzene at salinity. It is therefore the first time that this component was shown to be biologically degradable in presence of salt. Further, it was shown that cells of Haloferax mediterranei DSM.1411 can simultaneously degrade all of the aforementioned compounds from their hypersaline environment. These findings of the present invention can be applied to natural and industrial residual streams.

Accordingly, the present invention relates to for reducing the content of at least one pollutant selected from the group consisting of nitrobenzene, formate, phenol, Methylenedianiline (MDA), in particular 4,4'-Methylenedianiline (MDA), and aniline in wastewater, whereby said wastewater has been derived from the production of diarylcarbonate, the production of polycarbonates or the production of diamines and polyamides of the diphenylmethane series and whereby said hypersaline wastewater comprises NaCl in a concentration of at least 6% (w/v) up to 25% (w/v) based upon the total volume of the hypersaline wastewater, said method comprising the steps of:
(a) providing a composition A comprising wastewater and said at least one pollutant;
(b) contacting composition A with Haloferax mediterranei cells, thereby generating a composition B comprising said composition A and Haloferax mediterranei cells; and (c) incubating composition B, thereby reducing the content of said at least one pollutant.

According to step (a) of the method of the present invention, a composition A comprising wastewater shall be provided. Said composition A is a solution which comprises said wastewater and said at least one pollutant selected from the group consisting of nitrobenzene, formate, phenol, 4,4'-Methylenedianiline (MDA) and aniline. The wastewater shall be hypersaline wastewater, i.e. wastewater having a high concentration of NaCl as defined herein below. In particular, the wastewater shall be industrial wastewater comprising said at least one pollutant such as industrial brine.

According to step (b) of the method of the present invention, composition A is contacted with Haloferax mediterranei cells. Thereby, a composition B is generated comprising composition A (and thus the wastewater and said at least one pollutant) and the Haloferax mediterranei cells (i.e. cells of this strain). In an embodiment of the method of the present invention, composition A is contacted with the cells by mixing composition A with the cells.

The strain *Haloferax mediterranei* is a halophilic strain and thus requires a high concentraion of NaCl for growth. Accordingly, composition B shall comprise NaCl in a high concentration. This allows for the treatment of hypersaline wastewaters (i.e. for reduction of the pollutant as referred to herein) without diluting the wastewater.

Accordingly, composition B, and thus the hypersaline wastewater shall comprise NaCl in a high concentration. A high concentration of NaCl as referred to herein is a concentration of least 6% (w/v), based on the total volume of the wastewater or the composition. The wastewater, composition A or B could comprise NaCl in a concentration up to the saturation concentration of NaCl since it has been shown in the studies underlying the present invention that e.g. the aniline content was reduced even at a NaCl concentration of 20.0% (w/v). Thus, the upper limit for the concentration is, in principle, the saturation concentration of NaCl. Thus, a high concentration of NaCl is a concentration of at least 6 % (w/v) up to 25% (w/v) based on the total volume of the wastewater or the composition. Accordingly, the wastewater is not brackish water or seawater which both have a lower concentration of NaCl.

Preferably, a high concentration of NaCl is a concentration of NaCl of at least 7% (w/v), more preferably of at least 10% (w/v), even more preferably of at least 12% (w/v), and most preferably of at least 15% (w/v) based on the total volume of composition or wastewater (e.g. of composition B).

Although the upper limit for a high concentration of NaCl is, in principle, the saturation concentration of NaCl, it is envisaged that the wastewater, composition A or B comprises NaCl in a concentration of less than the saturation concentration. Preferably, the NaCl concentration in the wastewater, composition A, or composition B is less than 23% (w/v), more preferably less than 22% (w/v), even more preferably less than 20% (w/v) based on the total volume of composition or wastewater.

In the studies underlying the present invention it was shown that optimal treatment was achieved at a concentration of NaCl of about 17% (w/v). Accordingly, the wastewater, composition A, or B, preferably comprises NaCl in a concentration of 12% to 22%(w/v), more preferably in a concentration of 12% to 20% (w/v), even more preferably in a concentration of 15% to 20% (w/v), and most preferably in a concentration of 16% to 18% (w/v), again based on the total volume of composition or wastewater.

The optimal NaCl concentration may depend on the pollutant. For example, with respect to aniline, the wastewater, composition A, or B, preferably comprises NaCl in a concentration of 12% up to 25% (w/v) based on the total volume of composition or wastewater. Further, the optimal NaCl concentration may dependent on the concentration of the pollutant in the wastewater/composition. E.g. it was observed in the studies underlying the present invention that higher concentrations of NaCl allow for an improved reduction of aniline, if the aniline concentration is high (e.g. larger than 20 mg/l).

High concentrations of NaCl can be found in various industrial wastewaters. In a preferred embodiment, the hypersaline wastewater has been isolated from methylene diamine production (as a preproduct of polyurethanes). Accordingly, step a) of the method of the present invention may comprise the isolation of hypersaline wastewater from methylene diamine production.

In particular, the wastewater is derived, i.e. has been isolated from the production of diamines and polyamines of the diphenylmethane series. The term "diamines and polyamines of the diphenylmethane series, refers to amines and mixtures of amines of the following type: 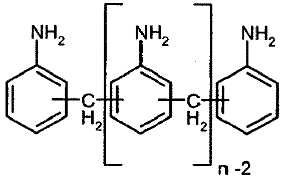 wherein n is an integer of 2 or larger than 2.

As set forth elsewhere herein, diamines and polyamines of the diphenylmethane series are preproduct of polyurethanes and can be produced by well known methods. Preferred methods of the production of said diamines and polyamines the diphenylmethane series are e.g. disclosed in EP 1 813 598 A1.

In an embodiment, the production of di- and polyamines of the diphenylmethane series is carried out by reacting aniline and formaldehyde in the presence of an acid catalyst. In an embodiment, hydrochloric acid is used as acid catalyst. After producing the diamines and polyamines from the diphenylmethane series, the acid catalyst is neutralized by addition of sodium hydroxide. Preferably, the addition of the neutralizing agent is carried out so that the resulting neutralization mixture can be separated into an organic phase containing the diamines and in particular the polyamines of the diphenylmethane series and excess aniline and an aqueous phase. The aqueous phase is the hypersaline wastewater containing the at least one pollutant as set forth herein.

In another embodiment of the present invention, the hypersaline wastewater has been isolated, i.e. is derived from the production of diaryl carbonate. The production of diaryl carbonates, and more particularly diphenyl carbonates, generally takes place by a continuous process, by the production or introduction of phosgene and subsequent reaction of monophenols and phosgene in an inert solvent in the presence of alkali and a nitrogen catalyst at the reaction interface. The production of diaryl carbonates is well known in the art. Preferred production methods are described in US200805836.

In another embodiment of the present invention, the hypersaline wastewater has been isolated, i.e. is derived from the production of polycarbonates.

The hypersaline wastewater might have been subjected to one or more purification step(s) prior to carrying out step a). The one or more purification steps shall allow for reducing the amount of solvent residues in the wastewater. This can be e.g. achieved by stripping off the solution with steam and/or treatment with adsorbents, in particular with active carbon. Further, the wastewater might have been filtered. Moreover, the hypersaline wastewater may have been purified by treatment of wastewater using ozone (ozonation). Ozonation (also referred to as ozonization) is a chemical water treatment technique based on the infusion of ozone into water (see e.g. WO2000078682).

Further, it is envisaged that the NaCl concentration of the wastewater is concentrated prior to carrying out step a) of the method of the present invention, e.g. by membrane distillation process, osmotic distillation or reverse-osmosis, Further, preferred methods for concentrating a composition comprising NaCl are described elsewhere herein.

Advantageously, it has been shown in the context of the present invention that cells of the strains Haloferax mediterranei are capable of reducing content of at least one pollutant as referred to herein (of at least one pollutant selected from the group consisting of nitrobenzene, formate, phenol, methylenedianiline, in particular 4,4'-Methylenedianiline (IUPAC name: Bis(4-aminophenyl)methane) and aniline) in hypersaline salt water. Thus, it is envisaged that the hypersaline wastewater, composition A, and composition B comprises said at least one pollutant.

In accordance with the present invention, the content of at least one pollutant selected from the group consisting of nitrobenzene, formate, phenol, methylenedianiline, in particular 4,4'-Methylenedianiline (MDA) and aniline shall be reduced, i.e. the content of said at least pollutant in the hypersaline wastewater and thus in composition A and B shall be reduced.

The term "at least one pollutant" as used herein mean one or more than one. Thus, the content of one, two, three, four or five pollutants can be reduced. In a preferred embodiment, the content of one pollutant is reduced. In a preferred embodiment, the contents of four pollutants: formate, phenol, methylenedianiline, in particular 4,4'-Methylenedianiline (MDA), and aniline as referred in accordance of the method of the present invention are reduced by the method of the present invention. In another preferred embodiment, the contents of all five pollutants as referred in accordance of the method of the present invention are reduced by the method of the present invention. In particular, said contents are reduced simultaneously.

Thus, the hypersaline wastewater, composition A and B shall comprise said at least one pollutant, preferably at least 0.5 mg/l formate, 0.5 mg/l phenol, 0.5 mg/l nitrobenzene, 0.5 mg/l 4,4'-Methylenedianiline (MDA) and/or 0.5 mg/l aniline, more preferably 3 mg/l formate, 3 mg/l phenol, 3 mg/l nitrobenzene, 3 mg/l 4,4'-Methylenedianiline (MDA) and/or 3 mg/l aniline.

The following applies to the pollutant aniline:
Preferably, the hypersaline wastewater, composition A and/or composition B comprises aniline in an amount of at least 0.5 mg/l, more preferably in an amount of at least 2 mg/l, and most preferably in an amount of at least 5 mg/l. Further, it is envisaged that composition A (or B) comprises aniline in an amount of at least 10 mg/l, in particular in an amount of at least 20 ml/l.

Also preferably, the hypersaline wastewater, composition A and/or composition B comprises aniline in an amount of 1 to 100 mg/l, more preferably, in an amount of 2 to 50 mg/l, and most preferably in an amount of 2 to 20 mg/l. Further, it is envisaged that it comprises aniline in an amount of 2 to 12 mg/l.

The following applies to the pollutant formate:
Preferably, the hypersaline wastewater, composition A and/or composition B comprises formate in an amount of at least 10 mg/l, more preferably in an amount of at least 30 mg/l, and most preferably in an amount of at least 100 mg/l.

Also preferably, the hypersaline wastewater, composition A and/or composition B comprises formate in an amount of 10 mg/l to 10 g/l, more preferably, in an amount of 30 mg/l to 1 g/l, and most preferably in an amount of 50 to 500 mg/l.

The following applies to the pollutant nitrobenzene:
Preferably, the hypersaline wastewater, composition A and/or composition B comprises nitrobenzene in an amount of at least 1 mg/l, more preferably in an amount of at least 5 mg/l, and most preferably in an amount of at least 10 mg/l.

Also preferably, the hypersaline wastewater, composition A and/or composition B comprises nitrobenzene in an amount of 1 to 100 mg/l, more preferably, in an amount of 2 to 50 mg/l, and most preferably in an amount of 2 to 20 mg/l.

The following applies to the pollutant 4,4'-Methylenedianiline:
Preferably, the hypersaline wastewater, composition A and/or composition B comprises 4,4'-Methylenedianiline in an amount of at least 0.25 mg/l, more preferably in an amount of at least 0.5 mg/l, and most preferably in an amount of at least 1 mg/l. Further, it is envisaged that it comprises 4,4'-Methylenedianiline in an amount of at least 3 mg/l.

Also preferably, the hypersaline wastewater, composition A and/or composition B comprises 4,4'-Methylenedianiline in an amount of 0.25 to 30 mg/l, more preferably, in an amount of 1 to 10 mg/l, and most preferably in an amount of 2 to 7 mg/l. Further, it is envisaged that it comprises 4,4'-Methylenedianiline in an amount of 0.5 to 20 mg/l.

The following applies to the pollutant phenol:
Preferably, the hypersaline wastewater, composition A and/or composition B comprises phenol in an amount of at least 1 mg/l, more preferably in an amount of at least 5 mg/l, and most preferably in an amount of at least 10 mg/l. Further, it is envisaged that it comprises phenol in an amount of at least 20 mg/l.

Also preferably, the hypersaline wastewater, composition A and/or composition B comprises phenol in an amount of 1 to 500 mg/l, more preferably, in an amount of 5 to 100 mg/l, and most preferably in an amount of 5 to 50 mg/l. Further, it is envisaged that it comprises phenol in an amount of 5 to 20 mg/l.

Preferably, composition A has a total organic carbon ("TOC") content of more than 50 mg/l, more preferably of more than 60 mg/l, even more preferably of more than 60 mg/l, and most preferably of more than 65 mg/l. Further, it is envisaged that composition A has a TOC (total organic carbon) content of more than 70 mg/l, in particular of more than 70 mg/l. Preferably, the composition A can have a total organic carbon ("TOC") content of up to 1000 mg/l and more.

In accordance with the present invention, the content of at least one pollutant of hypersaline wastewater and thus the content of said at least one pollutant of composition A and composition B, respectively, shall be reduced (the terms "content", "amount" and "concentration" are used interchangeably herein). Said at least one pollutant is selected from the group consisting of nitrobenzene, formate, phenol, methylenedianiline , in particular 4,4'-Methylenedianiline (MDA), and aniline The term "reducing" as used herein shall refer to a significant reduction of the pollutant content (i.e. of the at least one pollutant) of the hypersaline wastewater. Preferably, the term denotes a reduction of said pollutant of at least 30%, at least 50%, at least 70% or in particular of at least 90% or of at least 95% of the total content of said pollutant present in the hypersaline wastewater, composition A and composition B, respectively. Accordingly, the total content of a pollutant as referred to herein in composition B (or composition A) shall be reduced by at least 30%, at least 50%, at least 70% or in particular by at least 90% by of at least 95%.

The resulting composition C, i.e. the treated wastewater, preferably comprises aniline in an amount of less than 5 mg/l. More preferably, it comprises aniline in an amount of less than 1 mg/l and most preferably less than 0.2 mg/l.

Also preferably, the treated wastewater comprises formate in an amount of less than 15 mg/l, more preferably less of than 10 mg/l and most preferably less than 5 mg/l after the method of the present invention has been carried out.

Also preferably, the treated wastewater comprises nitrobenzene in an amount of less than 15 mg/l, more preferably of less than 10 mg/l and most preferably of less than 5 mg/l after the method of the present invention has been carried out.

Also preferably, the treated wastewater comprises 4,4'-Methylenedianiline in an amount of less than 15 mg/l, more preferably of less than 10 mg/l and most preferably of less than 5 mg/l after the method of the present invention has been carried out.

Also preferably, the treated wastewater comprises phenol in an amount of less than 15 mg/l, more preferably of less than 10 mg/l and most preferably of less than 5 mg/l after the method of the present invention has been carried out.

Further, it is envisaged that said at least one pollutant is eliminated completely.

By carrying out the method of the present invention, the TOC content will be reduced as well (i.e. in addition to the content of the at least one pollutant). Preferably, the treated wastewater has a TOC content of less than 40 mg/l, more preferably of less than 30 mg/l and most preferably of less than 20 mg/l (in particular after separation of the cells from composition B as described herein elsewhere).

Preferably, the content of the at least one pollutant as referred to herein is reduced by the presence, and thus, by the activity of the Haloferax mediterranei cells as referred to herein. Preferably, said the content is reduced by degradation of the pollutant by said cells. A reduction of the concentration of the at least one pollutant by dilution of the wastewater, or composition A or B is not considered as a reduction of the content of said at least one pollutant. Accordingly, the term "reducing the content of at least one pollutant..." does not encompass the reduction of the concentration of the said at least one pollutant by dilution effects (e.g. by diluting the hypersaline wastewater or composition A or B).

The cell to be used in accordance with the present invention are *Haloferax mediterranei* cells. Preferably, said cells are cells from the strain *Haloferax mediterranei* which has been deposited in the DSM (Deutsche Sammlung von Mikroorganismen und Zellkulturen, Braunschweig, Germany) under DSM number 1411. Thus, it contemplated that cells from the strain *Haloferax mediterranei* DSM 1411 are used (abbreviated herein HFX). The strain has been described by Rodriguez-Valera, F., Juez, G., Kushner, D. J. (1983). Halobacterium mediterranei sp. nov., a new carbohydrate-utilizing extreme halophile. Syst.Appl.Microbiol. 4 : 369-381. How to culture this strain is well known in the art. For example, suitably culture conditions can be e.g. assessed from the DSMZ database for this strain. A suitable media compositions for this strain is described in Example 1 of the Examples section.

The cells to be contacted with composition A (i.e. mixed with composition A) in step b) shall be viable, i.e. living cells. How to assess whether cells are viable, or not, can be assessed by well known methods. Of course, a certain percentage of the cells to be mixed with composition A might not be viable. However, this is taken into account by the skilled person.

In an embodiment, a suspension of cells of *Haloferax mediterranei* is mixed with composition A. The cells are preferably derived from a pre-culture of cells of the respective strain. The suspension shall comprise a suitable substrate (i.e. a carbon source) Although not necessary, the pre-culture of the cells can be been carried out in the presence of the at least one pollutant as referred to herein.

The amount of cells of *Haloferax mediterranei* as referred to herein to be mixed, i.e. contacted with composition A, can be determined by the skilled person. The cell amount to be mixed shall allow for a sufficient reduction of the at least one pollutant as referred to herein in the hypersaline wastewater and thus in composition A and B (which comprises the hypersaline wastewater). The amount e.g. depends on the volume of composition A to be treated by the method of the present invention. In general, the larger the volume of composition A to be treated, the larger shall be the amount of cells to be used. This will be taken into account by the skilled person.

The mixing may take place in a suitable container. In an embodiment, the mixing is carried out in a bioreactor. The term "bioreactor" as used herein refers to a system in which conditions are closely controlled to permit the reduction of the content of the at least one pollutant as referred to herein. In an embodiment, said bioreactor is a stirred tank reactor. Preferably, the bioreactor is made of a non-corrosive material such as stainless steel. The bioreactor can be of any size as long as it is useful for the incubation of composition B. Preferably, the bioreactor allows for a large scale reduction of content of said at least one pollutant. Therefore, it is envisaged that the bioreactor has a volume of at least 1, 10, 100, 500, 1000, 2500, or 5000 liters or any intermediate volume. However, it is also envisaged to carry out the method of the present invention at a low scale, such as with 5 to 100 ml of composition B.

Composition B may further comprise media components which allow for the reduction of the content of said at least one pollutant by the Haloferax mediterranei cells. Such media components are well known in the art and include e.g. NH₄Cl, KH₂PO₄, Na₂SO₄, MgClz (e.g. MgCh * 6 H₂O), FeCl₃, MgSO₄, CaCl₂ (e.g. CaCl₂ * 2 H₂O), KBr and KCl. In an embodiment, composition B comprises a phosphor source, a nitrogen source, a sulfur source, a potassium source and/or a magnesium source (as media components). Composition B may further comprise trace elements such as iron, copper, zinc and cobalt. In an embodiment, the media components are added to composition B after contacting composition A with the cells, i.e. mixing the composition and the cells (as set forth in step (b)).

The selection of suitable media components can be carried out by the skilled person without further ado. Moreover, the skilled person can determine suitable concentrations of media components without further ado.

For example, the following concentration ranges and concentrations for the following media components are considered as suitable. The present invention is, however, not limited to the media components referred to above and the following concentration ranges.

Concentration in composition B:
- NH₄Cl: 0.5 to 3 g/l, e.g. 1.5 g/l
- KH₂PO₄: 0.05 to 0.5 g/l, e.g. 0.15 g/l
- MgCl₂ * 6 HzO: 0.5 to 3 g/l, e.g. 1.3 g/l
- CaCl₂ * 2 HzO: 0.1 to 2 g/l, e.g. 0.55 g/l
- KCl: 0.5 to 3 g/l, e.g. 1.66 g/l
- MgSO₄.7H₂O: 0.5 to 3 g/l, e.g. 1.15g/l
- FeCl₃: 0.001 to 0.1 g/l, e.g. 0.005 g/l
- KBr: 0.1 to 2 g/l, e.g. 0.5 g/l
- MnCl₂.4H₂O: 0.001 to 0.1 g/l, e.g. 0.003 g/l

Further preferred concentrations for media components are specified in Table 1 of the Examples section. Further, the composition may comprise trace elements.

In a preferred embodiment of the present invention, composition B further comprises a substrate. Said substrate shall allow for the growth of the Haloferax mediterranei cells. Whether a substrate allows for the growth of the strain, or not, can be assessed by the skilled person without further ado.

In an embodiment, said substrate shall be present in addition to the at least one pollutant selected from the group consisting of nitrobenzene, formate, phenol, methylenedianiline, in particular 4,4'- Methylenedianiline (MDA) and aniline as the pollutants are degraded only and not used as substrate. Thus, it is contemplated that the substrate is not said at least one pollutant, i.e. is not nitrobenzene, formate, phenol, methylenedianiline, in particular 4,4'-Methylenedianiline (MDA) and aniline. Therefore, the substrate is herein also referred to as co-substrate.

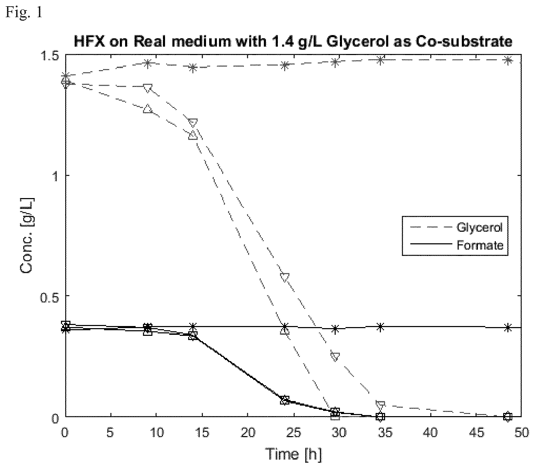

Preferably, the presence of said substrate allows for an improved reduction of the content of e.g. aniline and formate (see examples sections). For example, the addition of glycerol significantly increases the degradation rates of all the pollutants (formate, aniline, MDA, nitrobenzene and phenol), see also examples and Figure 1.

The substrate is preferably added to composition B. Accordingly, it is envisaged that the substrate is not present or is essentially not present in composition A. Preferably, said substrate is a carbohydrate (that allows for the growth of the Haloferax mediterranei cells), more preferably said substrate is glycerol, an organic acid, or a sugar (that allows for the growth of the Haloferax mediterranei cells), more preferably the substrate is selected from glycerol, acetate, glucose, sucrose, lactate, malate, succinate, and citrate. In a particular preferred embodiment, the substrate is glycerol.

Preferably, composition B comprises a substrate if the incubation is carried out as continuous process. The substrate shall allow for biomass growth in slow rate in order to achieve stability of degradation in continuous mode. Advantageously, it was observed that e.g. the content of aniline could be continuously degraded once cells are growing at their maximum growth rates, when a further substrate, glycerol, was continuously added to composition B, i.e. a reactor containing composition B.

Suitable concentrations or concentration ranges for the substrate can be determined by the skilled person without further ado. The reduction of the content of said at least one pollutant as referred to herein in the wastewater (composition A) and thus the incubation as referred to herein is preferably done under carbon limitation. Accordingly, it is envisaged that the concentration of the substrate such as growths allows for biomass growth at a slow rate. Thereby fresh biomass is produced which allows for the reduction of the content of said at least one pollutant in a continuous way. Preferably, the substrate is added to composition B in an amount that is completely taken up by the cells. Thus, it is envisaged that the TOC content would not be increased by the addition of the substrate.

For example, it is envisaged that the concentration of the substrate, in particular of the substrates mentioned above, in composition B is 0.5 g/l to 10 g/l, in particular 0.5 g/l to 5 g/l.

In an embodiment of the present invention, the further media components and/or the suitable substrate are (is) added to composition B, in particular after mixing composition A and the Haloferax mediterranei cells. E.g. the further media components and/or the suitable substrate can be at the beginning of the incubation of composition B or during incubation of composition B (e.g. continuously or as pulse).

Of course, the concentration of the substrate will change during incubation, because the substrate will be metabolized by the cells comprised by composition B at a certain rate. Thus, the substrate concentration might not be constant. Nevertheless, additional substrate might be added during incubation in order to compensate for the decrease of the substrate content.

In accordance with the method of the present invention, it is envisaged that contacting composition A with the cells in step (b) does not significantly increase the volume of the resulting composition B (as compared to the volume of composition A). Accordingly, the main component of composition B shall be composition A. Thus, step (b) does not significantly dilute composition A. The dilution factor is preferably lower than 1.2, more preferably lower than 1.1, and most preferably lower than 1.05. Further, it is envisaged that the dilution factor is lower than 1.03 or 1.02. The term "dilution factor" as used herein preferably refers to ratio of the volume of composition B to the volume of composition A. In other words, composition B comprises (in particular consists of) at least 80%, more preferably at least 90%, and most preferably at least 95% by weight of composition A, based on the total weight of composition B. Further, it is envisaged that composition B comprises (in particular consists of) at least 97% or 98% by weight of composition A, based on the total weight of composition B. Since the dilution factor is negligible, it is envisaged that composition A comprises the same, or essentially the same content of said at least one pollutant and NaCl as composition B. Thus, the concentrations of NaCl and of the at least one pollutant provided for composition A or the hypersaline wastewater preferably are also the concentrations of NaCl and of the at least one pollutant in composition B. Of course, the concentration of said at least one pollutant in composition B will decrease of time due the activity of the *Haloferax mediterranei* cells.

After contacting composition A with the cells, the resulting composition B is incubated in order to allow for the reduction of the at least one pollutants by the Haloferax mediterranei. Accordingly, the method of the present invention comprises the further step (c) of incubating composition B. In this incubation step, the content of said at least one pollutant is reduced.

Accordingly, the present invention in particular envisages a method for reducing the content of at least one pollutant selected from the group consisting of nitrobenzene, formate, phenol, methylenedianiline, in particular 4,4'-Methylenedianiline (MDA), and aniline, of hypersaline wastewater (i.e. of a composition comprising hypersaline wastewater), said method comprising the steps of:
(a) providing a composition A comprising hypersaline wastewater and said at least one pollutant,
(b) contacting composition A with Haloferax mediterranei cells, thereby generating a composition B comprising said composition A and cells of said Haloferax mediterranei microbial strain, and
(c) incubating composition B, thereby reducing the content said at least one pollutant of said composition.

The incubation of composition B shall be carried out under suitable conditions, i.e. under conditions which allow for the reduction of the content of said at least one pollutant by the cells of said Haloferax mediterranei strain as referred to herein. Preferably, the incubation is carried out in a bioreactor.

Preferably, the incubation of composition B (and thus the reduction of the content of said at least one pollutant) is carried out at a pH value of composition B in the range of 6.0 to 8.2, more preferably in the range of 6.2 to 7.6, most preferably in the range of 6.8 to 7.4. The optimal pH value is 7.2.

Moreover, it is envisaged that the incubation is preferably carried out at a temperature of 18°C to 55°C, more preferably at a temperature of 25°C to 45°C, even more preferably at a temperature of 30°C to 40°C, most preferably at a temperature of 35°C to 40°C. The optimal temperature is 37°C.

It is envisaged that the reduction is carried out at a constant temperature. However, it is also contemplated that the temperature might change during the incubation. In a preferred embodiment of the present invention, the temperature of composition B is monitored during incubation.

In a preferred embodiment of the method of the present invention, composition B is agitated (during incubation).

The incubation is carried out under aerobic conditions. Preferably, aerobic conditions are maintained by adding air or purified oxygen to composition B continuously.

Preferably, composition B has a pH value in the range of 5.8 to 8.5, more preferably 6.0 to 8.0, and most preferably in the range of 6.2 to 7.5. Accordingly, the incubation is preferably carried out at a pH value in the range of 5.8 to 8.5, preferably in the range of 6.2 to 7.5. In a preferred embodiment, the pH value of composition B is monitored during incubation. It is envisaged that the pH value is kept constant during cultivation. This can be e.g. achieved by adding HCl.

The concentration of the biomass of the cells, in the incubation step can be any concentration that allows for the reduction of the content of said at least one pollutant. For example, the biomass concentration can be in a range between 0.2 and 10 g/l, in particular in a range between 0.5 to 4.5 g/l. E.g. optimum biomass concentration for 250 mg/l aniline is 1.6 g/l. Thus, it is also envisaged that the biomass concentration is in a range between 1.3 to 1.9 g/l.

As set forth above, the method of the present invention is preferably carried out in a large scale. Accordingly, composition B has preferably a volume of at least 1, 10, 100, 500, 1000, 2500, or 5000 liters or any intermediate volume. However, smaller volumes such as volumes of at least 5 ml or 100 ml are envisaged by the present invention as well (e.g. for tests).

The method of the present invention, in particular the incubation as referred to herein in step (c) of the method of the present invention, is preferably carried out as a batch, fed-batch or continuous process, in particular as batch, fed-batch or continuous process with cell retention (preferably in a bioreactor). Accordingly, composition B is incubated under batch, fed-batch, or continuous conditions. The term "batch process" preferably refers to a method of incubating cells in which all the components that will ultimately be used for incubating the cells including the substrate and the further media components, composition A as well as the cells themselves, are provided at the initiation of the incubation process. A batch process is preferably stopped at some point and the treated hypersaline wastewater is isolated. The term "fed-batch process" as used herein refers to a process of incubating cells in which additional components such as the additional media components and/or the substrate are provided to the culture at some time after the initiation of the culture process. The A fed-batch culture is preferably stopped at some point and the cells and/or components in the medium are harvested and the treated hypersaline wastewater is isolated.

In a particularly preferred embodiment, the method of the present invention, and thus the incubation as referred to herein, is carried in continuous culture with a mixed feed system using a substrate as referred to above (such as glycerol or acetate).

In a preferred embodiment of the aforementioned method of the present invention, the method further comprises the step of separating the *Haloferax mediterranei* cells from the composition B, thereby giving a composition C. The separation of the cells from composition B shall be carried out after the incubation of composition B, i.e. after the reduction of the content of said at least one pollutant, as step (d).

The resulting composition C (which is herein also referred to as the "treated wastewater") shall be essentially free of the *Haloferax mediterranei* cells. In other words, composition C shall not comprise the cells.

The separation of cells from composition B can be achieved by all cell retention means that are deemed appropriate. For example, the separation of cells can be achieved by centrifugation, filtration, or by decanting. Preferably, the cells are separated from composition B by filtration.

Further, the cells could be immobilized on beads or a solid support, thereby allowing the separation of the cells from composition B.

If a continuous process is carried out, it is contemplated that the separated cells are fed back to the wastewater. Accordingly, the separated cells are contacted with composition A or, in particular composition B.

If the method is carried out in a bioreactor, the bioreactor preferably comprises means for cell retention. Preferably, the bioreactor comprises a membrane suitable for separating the cells from composition B by filtration.

Composition C preferably has a TOC content of less than 40 mg/l, more preferably of less than 30 mg/l and most preferably of less than 20 mg/l.

In a preferred embodiment of the present invention, the method further comprises concentrating the composition C, thereby giving a composition C*.

This step will increase the NaCl concentration of the treated wastewater, i.e. the NaCl is up-concentrated in the composition. Preferably, the concentrated composition C* comprises NaCl in a concentration of more than 20.0% (w/v), based on the total volume of composition A, in particular in a concentration of more than 22% (w/v). These NaCl concentrations are ideal concentrations when used in the feed stream of the chloralkali process.

In accordance with the present invention, the up-concentration of composition C can be concentration by any method deemed appropriate. Preferred methods are reverse osmosis, ultrafiltration and nanofiltration. In these methods, a positive osmotic pressure to one side of a filtration membrane. Further, the up-concentration can be achieved by evaporization.

As set forth above, composition A and B may comprise NaCl in a concentration of more than 20% (w/v), based on the total volume of said composition. If these concentrations are used, the concentration step, in principle, could be omitted when subjecting the treated wastewater to the chloralkali process.

However, composition C and C* can be subjected to further purification steps. In an embodiment of the method of the present invention, the method further comprises the removal of inorganic components from said composition. Said inorganic components are preferably trace elements and/or salts of the media components. The removal shall be carried our prior to subjecting composition C or C* to sodium chloride electrolysis.

The definitions and explanations given herein above apply *mutatis mutandis* to the following subject-matter of the present invention, in particular to the following method of the present invention for the production of chlorine and/or sodium hydroxide, to the composition of the present invention, the bioreactor of the present invention, and the use of the present invention.

The present invention also relates to a method for the production of chlorine and sodium hydroxide, comprising the steps of
(i) providing a composition C according to the method of the present invention or a composition C* according to the method of the present invention, and
(ii) subjecting the composition according to (a) to a sodium chloride electrolysis, thereby producing chlorine and sodium hydroxide.

Step (i) of the aforementioned method, i.e. the provision of a composition C according to the method of the present invention or of a composition C* according to the method of the present invention, preferably comprises the steps of the method for reducing the content of at least one pollutant selected from the group consisting of nitrobenzene, formate, phenol, 4,4'-Methylenedianiline (MDA) and aniline of a hypersaline solution.

In an embodiment, composition C is provided by the following steps.
(a) providing a composition A comprising hypersaline wastewater and said at least one pollutant and,
(b) contacting composition A with Haloferax mediterranei cells, thereby generating a composition B comprising said composition A and said cells ,
(c) incubating composition B, thereby reducing the content of said at least one pollutant of the composition, and
(d) separating the Haloferax mediterranei cells from composition B, thereby providing composition C.

If composition C* provided, step ii) preferably comprises the further step of (e) concentrating the composition C, thereby providing composition C*.

The electrolysis of sodium chloride can be carried out by methods well known in the art. Membrane electrolysis processes are usually used, for example, for the electrolysis of solutions containing sodium chloride (on this subject, see Peter Schmittinger, CHLORINE, Wiley-VCH Verlag, 2000). Here, an electrolysis cell which is divided in two and comprises an anode space with an anode and a cathode space with a cathode is used, Anode space and cathode space are separated by an ion-exchange membrane. A solution containing sodium chloride and having a sodium chloride concentration of usually more than 300 g/l is introduced into the anode space. At the anode, the chloride ion is oxidized to chlorine which is discharged from the cell with the depleted sodium chloride solution (about 200 g/l). The sodium ions migrate under the action of the electric field through the ion-exchange membrane into the cathode space. During this migration, each mol of sodium carries with it from 3.5 to 4.5 mol of water, depending on the membrane. This leads to the anolyte becoming depleted in water. In contrast to the anolyte, water is consumed on the cathode side by the electrolysis of water to form hydroxide ions and hydrogen. The water carried with the sodium ions into the catholyte is sufficient to keep the sodium hydroxide concentration in the output at 31-32% by weight, at an inlet concentration of 30% and a current density of 4 kA/m². In the cathode space, water is electrochemically reduced to form hydroxide ions and hydrogen.

As an alternative, a gas diffusion electrode at which oxygen is reacted with electrons to form hydroxide ions and no hydrogen is formed can be used as cathode. The hydroxide ions together with the sodium ions which have migrated into the cathode space via the ion-exchange membrane form sodium hydroxide. A sodium hydroxide solution having a concentration of 30% by weight is usually fed into the cathode chamber and a sodium hydroxide solution having a concentration of 31-32% by weight is discharged. The aim is to achieve a very high concentration of sodium hydroxide since the sodium hydroxide is usually stored or transported as a 50% strength solution. However, commercial membranes are at present not resistant to an alkali solution having a concentration greater than 32% by weight, so that the sodium hydroxide solution has to be concentrated by thermal evaporation.

In the case of the electrolysis of sodium chloride, additional water is introduced into the anolyte via this solution containing sodium chloride, but water is only discharged into the catholyte via the membrane. If more water is introduced via the solution containing sodium chloride than can be transported to the catholyte, the anolyte becomes depleted in sodium chloride and the electrolysis cannot be operated continuously. In the case of very low sodium chloride concentrations, the secondary reaction of oxygen formation would occur.

In a preferred embodiment of the method of the present invention, the electrolysis is membrane cell electrolysis of sodium chloride, in particular membrane electrolysis using oxygen consuming electrodes, diaphragm cell electrolysis of sodium chloride or mercury cell electrolysis of sodium chloride.

The present invention further concerns the composition B as defined herein above in connection of the method of the present invention. Accordingly, the present invention relates to the composition B comprising hypersaline wastewater, at least one pollutant selected from the group consisting of nitrobenzene, formate, phenol, 4,4'-Methylenedianiline (MDA) and aniline, and Haloferax mediterranei cells.

Preferred contents/concentractions of said at least one pollutant or and further preferred NaCl concentrations are disclosed in connection of the method of the present invention for reducing the aniline and/or the formate content. In addition, the composition may comprise components (such as further media components and/or a suitable substrate etc.) as described above.

Further, the present invention relates to a bioreactor comprising at least 1 l of the composition B of the present invention.

Further, the present invention relates to the use Haloferax mediterranei cells for reducing the content of at least one pollutant selected from the group consisting of nitrobenzene, formate, phenol, 4,4'-Methylenedianiline (MDA) and aniline of hypersaline wastewater.In particular, the present invention relates to the use of said cells for reducing the content of said at least one pollutant of a composition B.

The definitions and explanations given herein above in connection with the method of the present invention of reducing the content of said at least one pollutant apply accordingly to aforementioned uses. Thus, in accordance with the aforementioned uses, the content of said at least one pollutant is preferably reduced as described herein above in connection with the method of the present invention.

The Figures show:
**Figure 1****.** The graph illustrates formate degradation in real brine (15 % w/v NaCl) after addition of 1.4 g/L Glycerol as co-substrate using cells of halophilic bacteria Haloferax mediterranei. Formate is degraded simultaneously with Glycerol (indicated with triangles). In the control experiment (indicated with Asterisks) shake flasks containing no cells neither Glycerol nor Formate was degraded.

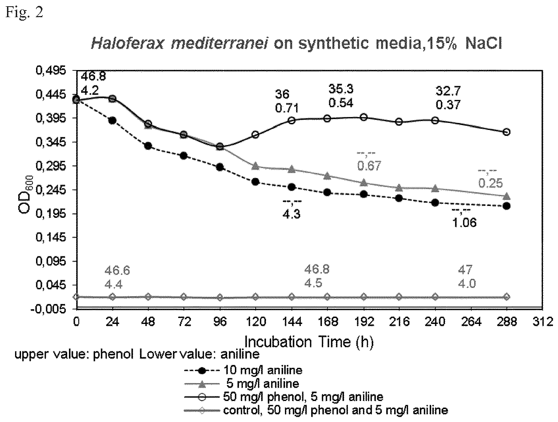

**Figure 2****.** Graph represents degradation of aniline (5 and 10 mg/l) using Haloferax mediterranei cells in model media containing 15 % w/v NaCl. After 240 hours of incubation and monitoring no biomass growth is observed on aniline as only substrate. In presence of a second substrate (50 mg/l phenol) increase in biomass concentration along with aniline and phenol reduction is shown. Rate of aniline degradation is dependent on the initial aniline concentration. In control experiment without bacterial cells no significant change in aniline or phenol concentration is detected.

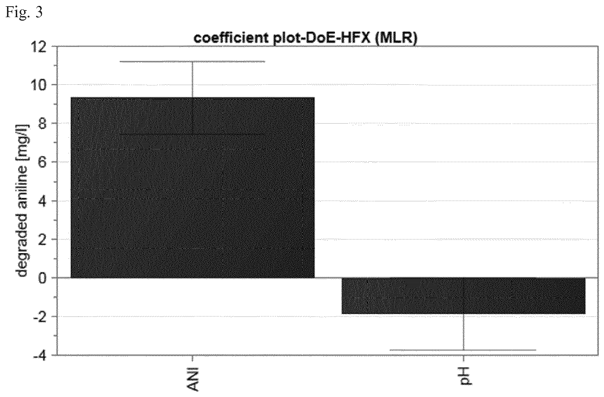

**Figure 3****.** The coefficient plot shows significance of two factors initial aniline concentration and pH on aniline degradation for strain Haloferax mediterranei. NaCl concentration seem to have no significance on aniline removal, aniline degradation by HFX occurs at all NaCl concentrations.

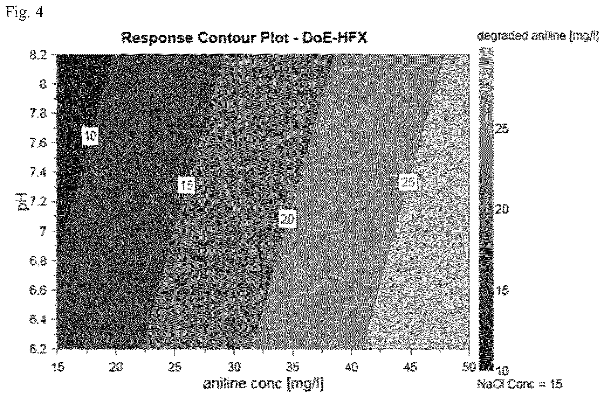

**Figure 4****.** The response counter plot shows the optimal aniline degradation may occurs at lower initial aniline concentrations for the strain Haloferax mediterranei.

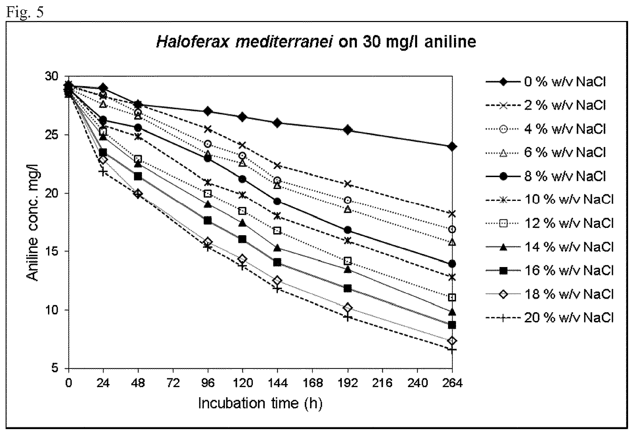

**Figure 5****.** The graph illustrates aniline degradation at various salt concentrations (0 to 20 % w/v NaCl) using cells of halophilic bacteria Haloferax mediterranei. Rate of aniline degradation is higher at higher salt concentrations.

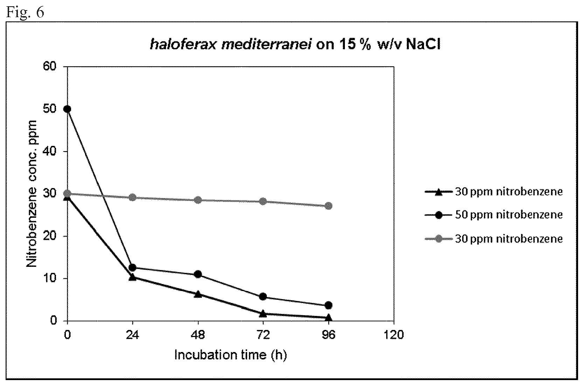

**Figure 6****.** The graph illustrates nitrobenzene degradation at 15 % w/v salt concentrations using cells of halophilic archaea Haloferax mediterranei. 80 % of total nitrobenzene content is degraded in the first 24 hours of incubation. In control experiment with 30 ppm nitrobenzene no significant reduction in nitrobenzene content is observed.

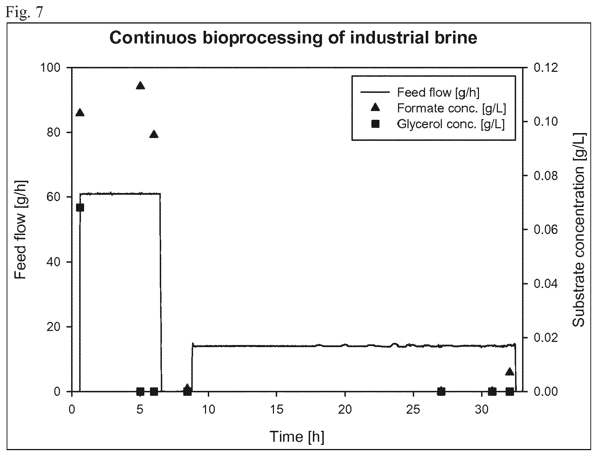

**Figure 7****.** Continuous processing of industrial brine containing 0.3 g/L formate using 5 g/L biomass of Haloferax mediterranei. Formate was degraded. The amount of residual formate concentration is dependent on the Dilution rate. The co-substrate glycerol is needed for biomass growth and is taken up completely in steady state condition.

The invention will be merely illustrated by the following Examples. The said Examples shall, whatsoever, not be construed in a manner limiting the scope of the invention, which is determined by the annexed claims.

### Examples

### Example 1: Degradation experiments in shake flasks

### Strains and media

*Haloferax mediterranei (DSM 1411)* (in this study *HFX*) wild type strain was purchased from DSMZ - German collection of microorganisms and cell cultures. Shake-flask cultures for inoculum preparation were grown under 180 rpm and 37 ° C in laboratory incubator (Infors, Switzerland) with slight modification in media no. 97 suggested by DSMZ having the following compositions (g/l): NaCl 250, MgSO₄. 7H₂O 20.0, KCl 2.0, Na-Citrate 3.0, FeSO₄. 7H₂O 0.05, MnSO₄. HzO, yeast extract 10.0 and Glucose 5.0; pH 7.0. The 500 ml Erlenmeyer flasks and the media were always sterilized.

### Analytics

Turbidity as indicator for cell growth was measured using Shimadzu UV/Vis spectrophotometer at 600 nm in various time intervals.

Residual formate, acetate and glycerol concentration in the culture supernatant was measured using HPLC. The HPLC (Thermo-Fisher) method was performed with an Aminex HPX-87H column from Bio-Rad at 30 °C, an isocratic eluent of 0.1% TFA in MQ water with a flow of 0.5 ml/min followed by UV detection at 210 nm. The limit of quantification with injection volume of 20 µl was 5 mg/l for formate and acetate. The standards used for quantification were prepared in the same salty matrix as the samples. Residual aniline, phenol, nitrobenzene and MDA concentration in the culture supernatant was measured using HPLC. The HPLC (Thermo-Fisher) method was performed with an Acclaim PA C-16 3 µm column (Thermo-Fisher). Acetonitrile, 25 mM KH₂PO₄ pH 3.5 buffer and MQ were used as the mobile phase and detection was done with UV at 190 nm. With an injection volume of 5 µl the limit of quantification for aniline 1 ppm, for phenol 0.5 mg/, for nitrobenzene 1 ppm, and for 4,4'MDA 0.1 mg/l . Lower concentrations were also detectable.

### Formate degradation in shake flask experiments

Haloferax mediterranei (DSM 1411) is an extreme halophilic Archaeon which requires at least 10 % (w/v) NaCl for growth. Optimal growth is reported for concentrations of 20 - 25 % NaCl (w/v).

For formate studies cells were cultivated in real industrial brine containing 0.37 g/L Formate and 15 % (w/v) NaCl. The media components were supplemented according to table 1 after adjusting the pH of the brine to 7.0. The medium had not been sterilized prior to fermentation.

Medium D is a synthetic medium with the composition indicated in table 2.

**Table 1. Media components added to the brine at pH 7.0 for Medium A, B and C.**

| Composition | | Amount g/l |
|---|---|---|
| Carbon Source: | | |
| | A) Glycerol or | A) 1.4 g/L |
| | B) Acetate or | B) 3.5 g/L |
| | C) Formate | C) 6.0 g/L |
| NH₄Cl | | 1.50 |
| KH₂PO₄ | | 0.15 |
| FeCl₃ | | 0.005 |
| MgCl₂.6H₂O | | 1.30 |
| MgSO₄.7H₂O | | 1.10 |
| CaCl₂.2H₂O | | 0.55 |
| KCl | | 1.66 |
| KBr | | 0.50 |
| MnCl₂.4H₂O | | 0.003 |
| Trace elements (Tab.3) | | 1ml |

Shake-flasks were inoculated with preculture that does not contain any complex carbon or nitrogen source. The inoculum was free of any residual carbon source. Shake flasks were inoculated to achieve a start OD of 0.25 in a total volume of 200 ml. Cells were grown in laboratory incubator (Infors, Switzerland) with 180 rpm and 37 ° C using 500 ml Shake flasks.

Experiments were done in duplicates together with a control experiment with only medium and no cells.

**Table 2. Media components for synthetic medium D (pH 7.0).**

| Composition | Amount g/l |
|---|---|
| NaCl | 150 |
| Formate | 6.0 g/L |
| NH₄Cl | 1.50 |
| KH₂PO₄ | 0.15 |
| FeCl₃ | 0.005 |
| MgCl₂.6H₂O | 1.30 |
| MgSO₄.7H₂O | 1.10 |
| CaCl₂.2H₂O | 0.55 |
| KCl | 1.66 |
| KBr | 0.50 |
| MnCl₂.4H₂O | 0.003 |
| Trace elements (Tab.3) | 1ml |

**Table 3. Composition of trace elements stock solution.**

| Composition | Amount mg/100ml |
|---|---|
| FeSO₄.7H₂O | 139 |
| CuSO₄.5H₂O | 100 |
| MnCl₂.4H₂O | 78 |
| CoCl₂.2H₂O | 62 |
| ZnSO₄.7H₂O | 86 |

The ability of HFX to degrade formate was investigated in shake flask experiments. Three different media were prepared with addition of A) Glycerol, B) Acetate and C) Formate. While A and B should show whether HFX can take up formate in presence of a co-substrate, trial C should show if formate supports growth of HFX. Both cell growth and formate degradation was monitored by numerous sampling.

It could be detected that formate was degraded rapidly when a second substrate (e.g. Glycerol or Acetate) was present. In those experiments formate and co-substrate were taken up simultaneously.

By supplementing additional formate to the industrial brine (medium C), it was investigated if formate could be taken up and be converted into biomass. The results showed that formate was degraded but no growth was detectable, indicating that formate is used by HFX as energy source but not for biomass production.

Further experiment showed HFX requires a second carbon source for degradation of formate. In contrast to medium C, that is an industrial waste stream that is known to contain organic pollutes like Aniline, MDA and Nitrobenzene, the medium D only contained formate as carbon source. For this medium neither growth nor degradation of formate could be detected.

### Example 2; Aniline and phenol uptake studies in shake flask

For the aniline uptake studies synthetically defined media was prepared. The media composition is listed below:

**Table 4. Synthetic defined media and trace elements composition to study phenol and aniline uptake by Haloferax mediterranei**

| Composition | Amount g/l |
|---|---|
| NaCl | 150 |
| NH₄Cl | 1.50 |
| KH₂PO₄ | 0.15 |
| FeCl₃ | 0.005 |
| MgCl₂.6H₂O | 1.30 |
| MgSO₄.7H₂O | 1.10 |
| CaCl₂.2H₂O | 0.55 |
| KCl | 1.66 |
| NaHCO₃ | 0.20 |
| KBr | 0.50 |
| MnCl₂.4H₂O | 0.003 |
| Trace elements | 1ml |
| Aniline 99% | 5- 100 mg |
| Phenol | 50 to 100 mg |

| Trace Elements Composition | Amount mg/100ml |
|---|---|
| FeSO₄.7H₂O | 136 |
| CuSO₄.5H₂O | 100 |
| MnCl₂.4H₂O | 50 |
| CoCl₂.2H₂O | 44 |
| ZnSO₄.7H₂O | 86 |

The strain was studied for aniline uptake. Cells previously grown on the complex media were harvested by centrifugation at 3000 rpm, for 5 minutes. Cells were washed and dissolved in shake-flasks containing 100 ml of the respective synthetic defined media and 15 % w/v NaCl with aniline as only carbon source and were incubated at temperature of 37 °C and agitation. At zero hour OD600 was measured and one ml sample was stored for HPLC analysis as reference. Growth on aniline and the residual aniline concentration was monitored. The strains Haloferax mediterranei fail to use aniline as a source for growth however the residual aniline concentration over time show aniline was completely removed from the culture media both on synthetic media and on actual brine depending on initial aniline concentration. In presence of a second substrate in this case phenol 50 to 100 mg/l increase in biomass concentration and better aniline degradation was detected. Growth of phenol was also detected in absence of aniline. The degradation of aniline and phenol was investigated in more details in more experiments in shake flasks as well as bioreactor in order to be able to control other process parameters.

### Example 3: Optimum culture conditions for aniline degradation

### Aniline studies using multivariate design of experiments

In order to find the optimum conditions for aniline degradation by HFX multivariate design of experiments was used. A fractional factorial design of experiment was carried out to evaluate the influence of three factors (pH, aniline concentration and NaCl concentration) on three parameters (delta biomass, residual aniline concentration and pH). The factors studied in this experiment along with respective ranges are given in (Table 5).

**Table 5. The factors and responses studied for aniline degradation by HFX**

| Factor name | Ranges |
|---|---|
| pH | 6.2 to 8.2 |
| aniline concentration | 15 to 50 mg/l |
| NaCl | 12 to 18 % w/v |

Eleven experiments were suggested by the statistical tool, Modde for this study. The experiments were performed in shake flasks on synthetic defined media at 37 ° C and 170 rpm strokes. Biomass concentration, pH changes and the residual aniline concentration were determined at 24 hour intervals. The measurements obtained after 144 hours were analyzed by Modde.

A valid model was obtained for delta aniline. Aniline was degraded in all experiments. The coefficient plot showed significance of initial aniline concentration and pH on aniline degradation. The best aniline degradation by HFX cells occurred at pH 6.2, 12 % w/v NaCl and 15 mg/l aniline where after 144 hours 94 % aniline was degraded.

### Aniline degradation at various salt concentrations

Degradation of aniline was studied at various salt concentrations of 0 to 20 % w/v in synthetic media containing 30 mg/l aniline as carbon source in shake flask experiments. The residual aniline concentration was determined by HPLC at 24 hour intervals. For the strain HFX better aniline degradation occurred at a higher NaCl concentration of above 14 % w/v where the best degradation was at 20 % w/v NaCl.

### Example 4: Nitrobenzene degradation by Haloferax mediterranei

### Primary shake flask experiments on nitrobenzene

For nitrobenzene uptake studies synthetically defined media was prepared. The media composition used is given in (Table1) where instead of aniline, 30 and 50 ppm nitrobenzene was used as only substrate. Cells previously grown on the complex media were harvested by centrifugation at 3000 rpm, for 5 minutes. Cells were washed and dissolved in shake-flasks containing 100 ml of the respective synthetic defined media and 15 % w/v NaCl with nitrobenzene as only carbon source and were incubated at temperature of 37 °C and agitation of 170 rpm. At zero hour OD600 was measured and one ml sample was stored for HPLC analysis as reference. Growth on nitrobenzene and the residual nitrobenzene concentration was monitored. The strain Haloferax mediterranei did not use nitrobenzene as a source for growth however the residual nitrobenzene concentration over time show it was completely removed from the culture media both on synthetic media and on actual brine. Highest degradation rate was observed during the first 24 hours. The degradation of nitrobenzene was investigated in more details in more experiments in shake flasks as well as bioreactor in order to be able to control other process parameters.

### Nitrobenzene studies using multivariate design of experiments

In order to find the optimum conditions for nitrobenzene degradation by HFX it was studied using multivariate design of experiments. A fractional factorial design of experiment was carried out to evaluate the influence of three factors (pH, nitrobenzene concentration and NaCl concentration) on three parameters (delta biomass, residual nitrobenzene concentration and delta pH). The factors studied in this experiment along with respective ranges are given in (Table 6).

**Table 6. The factors and responses studied for nitrobenzene degradation by HFX**

| Factor name | Ranges |
|---|---|
| pH | 6 to 8 |
| nitrobenzene concentration | 5 to 25 mg/l |
| NaCl | 15 to 20 % w/v |

Eleven experiments were suggested by the statistical tool, Modde for this study. The experiments were performed in shake flasks on synthetic defined media at 37 ° C and 170 rpm strokes. Biomass concentration, pH changes and the residual nitrobenzene concentration were determined at 24 hour intervals. The measurements obtained after 72 hours were analyzed by Modde, shown in table 7.

**Table 7. Shows the results obtained for nitrobenzene degradation by HFX.**

| Exp | pH | Nitrobenzene | NaCl % w/v | Δ OD600 | Degradation % |
|---|---|---|---|---|---|
| N1 | 6 | 5 | 15 | -0.099 | 60.1 |
| N2 | 8 | 5 | 15 | -0.098 | 80 |
| N3 | 6 | 25 | 15 | -0.093 | 81 |
| N4 | 8 | 25 | 15 | -0.08 | 64.5 |
| N5 | 6 | 5 | 20 | -0.117 | 80.4 |
| N6 | 8 | 5 | 20 | -0.136 | 80.4 |
| N7 | 6 | 25 | 20 | -0.124 | 89.3 |
| N8 | 8 | 25 | 20 | -0.128 | 87.7 |
| N9 | 7 | 15 | 17.5 | -0.106 | 100 |
| N10 | 7 | 15 | 17.5 | -0.094 | 100 |
| N11 | 7 | 15 | 17.5 | -0.108 | 100 |
| Control | 7 | 15 | 17.5 | 0.01 | 13 |

Table 7 shows the experimental matrix and the results obtained. Nitrobenzene was degraded in almost all experiments. Reduction in biomass concentration was observed in all experiments. In control experiment without cells 13 % nitrobenzene oxidation occurs in compare to 100 % removal in experiments N9 to 11 which show 87 % higher degradation in presence of HFX cells. The best nitrobenzene degradation by HFX cells occur at CenterPoint experiments with pH 7.0, 17.5 % w/v NaCl and 15 mg/l nitrobenzene where after 72 hours 100 % nitrobenzene was degraded.

### Example 5: Degradation of aniline, phenol, nitrobenzene and 4, 4 MDA in actual brine in batch mode

Cultivation was established in bioreactor in order to check applicability of degrading strain in actual processes on an industrial residual water. For this experiment HFX cells were used for the process using an actual brine containing 15 % w/v NaCl. In this case process parameters and culture conditions were controlled and the experiments were carried out in special corrosion resistant bioreactor equipment suitable for cultivation at hypersaline environments.

The special non-corrosive Labfors PEEK (Infors, AG, Switzerland) reactor was utilized with the following specifications:
Borosilicate glass culture vessel: 1 L volume
Borosilicate glass exhaust gas cooling
Special corrosion resistant Polymer (PEEK) bioreactor top lid
Special corrosion resistant Polymer (PEEK) thermometer holder
Borosilicate glass sampling tube and gas inlet tube
Special corrosion resistant agitator
Borosilicate glass jacket on the
reactor vessel

Online Analytics of:
Exhaust gas CO2
Exhaust gas O2
Glass pH probe
Hastelloy Clark pO2 and
Thermal Mass flow controller for air

The following media components were added to the brine: KCl 0.66 g/l, NH4Cl 1.5 g/l, KH2PO4 0.15 g/l, MgCl2.6H2O 1.3 g/l, MgSO4. 7H2O 1.1 g/l, FeCl3 0.005 g/l, CaCl₂.2H₂O 0.55 g/l, KBr 0.5 g/l, Mn stock 3ml and trace elements 1 ml.
Temperature: 37° C
pH: 7.2 (either 0.5 M HCl and 0.5 M NaOH were used for pH control)

As the aromatic compounds in this study are mostly degraded and not used as substrate to facilitate biomass growth in order to increase the biomass concentration in bioreactor a batch cultivation was done on brine with the addition of media components and glycerol as substrate for growth (Table 1). Once enough biomass was obtained (about 3 g/l) a master mix containing aniline 5 mg/l, phenol 5 mg/l and 4,4'MDA 3 mg/l was added to the reactor as a pulse. During the batch cultivation complete degradation of the aromatic compounds took up to 96 hours.

### Example 6: Degradation of formate, MDA, Nitrobenzene, Aniline and Phenol in actual residual water in continuous Bio-processing using cell retention system

### Bioreactor setup with cell retention

Continuous degradation of pollutants in actual brine was performed using a cell retention system. The industrial brine was supplemented with media components given in table 1 and glycerol as co-substrate. The amount of glycerol in the medium was adjusted in such a way to achieve a specific growth rate of 0.026 h-1. Cultivation was established in the bioreactor as described for shake flask experiments. Fermentation in the bioreactor was performed at 450 rpm agitation and 37 °C. The cell retention system was set in the bioreactor using a polysulfone (PSU) hollow fiber microfiltration membrane cartridge having an area of 420 cm² and a pore size of 0.2 µm. Feed flows of 130 to 610 g/h led to a dilution rate of 0.1 to 0.6 h-1. By adjusting the feed flow in relation to the cell containing bleed flow and the cell free harvest, a constant biomass in the fermenter could be achieved.

Turbidity as indicator for cell density and HPLC analytics of the residual formate, acetate and glycerol were measured during the entire process.

Residual MDA, Nitrobenzene, Aniline and Phenol were also measured by HPLC.

### Fermentations

HFX was cultivated in the 1 L bioreactor to degrade pollutants in brine with a continuous flow of ca. 0.3 g/L formate. For the experiments the two parameters Biomass concentration (g/L) and Dilution rate (h-1) were varied in the range of 2-5 g/L and 0.1 - 0.6 h-1 respectively.

Significant formate degradation could be observed for all continuous cultivations. Experiments with higher Biomass concentration resulted in lower residual formate concentration. In experiments with higher flow rate a higher residual formate concentration could be measured.

Analytics of the culture supernatant sampled from the reactor showed that the amount of MDA and aniline could also be decreased during bioprocessing. Phenol and nitrobenzene were degraded to a concentration below detection limit. HFX can degrade formate, MDA, aniline, phenol and nitrobenzene in batch as well as continuous mode. Rate of degradation of the mentioned pollutants depends on the biomass concentration, the dilution rate and the concentration of the pollutants in the brine.

### Summary - Conclusions:

Hypersaline wastewaters frequently comprise organic pollutants such as formate aniline, phenol, nitrobenzene and 4,4'Methylenedianilin. Several physical and chemical methods for example sorption, ozonation and electrochemical treatment are used to treat residual water containing organic compounds. However, most of the mentioned treatments are not able to reduce the total organic carbon content in the salty residual streams down to the required maximum level.

In this invention, it was discovered that Haloferax mediterranei DSM.1411 can actively degrade toxic organic pollutants from their hypersaline environment of up to 200 g/l salinity. Further, it was discovered that Haloferax mediterranei DSM.1411 can degrade formate aniline, phenol, nitrobenzene and 4,4'Methylenedianiline from hypersaline environments.

This invention can be directed to optimal and efficient treatment of any hypersaline water derived from the production of diarylcarbonate, the production of polycarbonates or the production of diamines and polyamines of the diphenylmethane series, containing any or the combination of the following components formate, phenol, nitrobenzene, 4,4'-Methylenedianiline (MDA) and aniline intending to reduce the total organic carbon content.

The other aspect of this current invention comprises the concept of residual to value. On one hand the environmental issues caused by highly saline residual streams enriched with considerable amount of unwanted organic contaminants and on the other hand need for high quality saline water as precursor for other industrial processes, such as membrane electrolysis, makes the pretreatments of these hypersaline residual streams, absolutely crucial. Our invention helps achieving this cheap, quick and efficient pretreatment to meet the requirement for membrane electrolysis to produce chlorine gas and/or sodium hydroxide from treated brine.

## Claims

1. A method for reducing the content of at least one pollutant selected from the group consisting of nitrobenzene, formate, phenol, methylenedianiline, in particular 4,4'-Methylenedianiline (MDA), and aniline, in hypersaline wastewater, whereby said hypersaline wastewater is derived from production of diarylcarbonate, production of polycarbonates or production of diamines and polyamines of the diphenylmethane series and whereby said hypersaline wastewater comprises NaCl in a concentration of at least 6 % (w/v) up to 25% (w/v) based on the total volume of the hypersaline wastewater, said method comprising the steps of
(a) providing a composition A comprising hypersaline wastewater and said at least one pollutant, and
(b) contacting composition A with Haloferax mediterranei cells, thereby generating a composition B comprising said composition A and Haloferax mediterrani cells, and
(c) incubating composition B, thereby reducing the content of said at least one pollutant.

2. The method of claim 1, wherein said composition B comprises NaCl in a concentration of at least 6% (w/v), preferably of at least 7% (w/v), more preferably of at least 10% (w/v), even more preferably of at least 12% (w/v), and most preferably of at least 15% (w/v) based on the total volume of composition B.

3. The method of any one of claims 1 to 2, wherein said composition B comprises at least 0.5 mg/l formate and/or 0.5 mg/l phenol and/or 0.5 mg/l nitrobenzene and/or 0.5 mg/l 4,4'-Methylenedianiline (MDA) and/or 0.5 mg/l aniline.

4. The method of any one of claims 1 to 3, wherein said composition B further comprises a substrate that allows for the growth of the Haloferax mediterranei cells, in particular wherein said substrate has been added to composition B, preferably said substrate is a carbohydrate, in particular glycerol, a sugar such as glucose or sucrose or an organic acid such as acetate, lactate, malate, succinate or citrate.

5. The method of claims 1 to 4, wherein the incubation in step (c) is carried out at temperature of 18°C to 55°C and/or wherein the incubation in step (c) is carried out at a pH value in the range of 6.0 to 8.2, preferably in the range of 6.2 to 7.6.

6. The method of claims 1 to 5, wherein said incubation in step (c) is carried out under aerobic conditions.

7. The method of any one of claims 1 to 6, wherein Haloferax mediterranei cells are Haloferax mediterranei DSM.1411 cells.

8. The method of any one of claims 1 to 7, wherein the total content of the at least on pollutant is reduced by at least 30%, at least 50%, at least 70% or in particular of at least 90% or of at least 95%.

9. The method of any one of claims 1 to 8, wherein said method further comprises the separation of the cells from composition B, thereby giving composition C, and optionally wherein the method further comprises concentrating composition C, thereby giving composition C*.

10. The method of claim 9, wherein said method further comprises the removal of inorganic components from composition C or C*, in particular of trace elements and/or salts of media components.

11. A method for the production of chlorine and sodium hydroxide, comprising the steps of
(i) providing a composition C or C* according to the method of claim 9 or 10, and
(ii) subjecting the composition according to (a) to a sodium chloride electrolysis process, thereby producing chlorine and sodium hydroxide and optionally hydrogen.

12. The method of claim 11, wherein the sodium chloride electrolysis is selected from membrane cell electrolysis of sodium chloride, in particular membrane electrolysis using oxygen consuming electrodes and diaphragm cell electrolysis of sodium chloride.

13. Use of Haloferax mediterranei cells for reducing the content of at least one pollutant selected from the group consisting of nitrobenzene, formate, phenol, methylenedianiline, in particular 4,4'-Methylenedianiline (MDA), and aniline in hypersaline wastewater, wherein the hypersaline wastewater is derived from the production of diarylcarbonate, the production of polycarbonates or the production of diamines and polyamines of the diphenylmethane series and whereas the hypersaline wastewater comprises NaCl in a concentration of at least 6 % (w/v) up to 25% (w/v) based on the total volume of the hypersaline wastewater.

14. A composition comprising hypersaline wastewater with a concentration of NaCl of at least 6 % (w/v) up to 25% (w/v) based on the total volume of the hypersaline wastewater, at least one pollutant selected from the group consisting of nitrobenzene, formate, phenol, methylenedianiline, in particular 4,4'-Methylenedianiline (MDA), and aniline, and Haloferax mediterranei cells, whereas said hypersaline wastewater is derived from the production of diarylcarbonate, the production of polycarbonates or the production of diamines and polyamines of the diphenylmethane series.

## Patentansprüche

1. Verfahren zur Verringerung des Gehalts wenigstens eines aus der Gruppe bestehend aus Nitrobenzol, Formiat, Phenol, Methylendianilin, insbesondere 4,4'-Methylendianilin (MDA) und Anilin ausgewählten Schadstoffs in hypersalinem Abwasser, wobei das hypersaline Abwasser aus der Herstellung von Diarylcarbonat, der Herstellung von Polycarbonaten oder der Herstellung von Diaminen und Polyaminen der Diphenylmethanreihe stammt und wobei das hypersaline Abwasser NaCl in einer Konzentration von wenigstens 6 % (Gew./Vol.) bis zu 25 % (Gew./Vol.) bezogen auf das Gesamtvolumen des hypersalinen Abwassers umfasst, wobei das Verfahren die folgenden Schritte umfasst:
(a) Bereitstellen einer Zusammensetzung A, die hypersalines Abwasser und den wenigstens einen Schadstoff umfasst, und
(b) In-Kontakt-Bringen von Zusammensetzung A mit Haloferax mediterranei-Zellen, wodurch eine Zusammensetzung B erzeugt wird, die Zusammensetzung A und Haloferax mediterrani-Zellen umfasst, und
(c) Inkubieren von Zusammensetzung B, wodurch der Gehalt des wenigstens einen Schadstoffs verringert wird.

2. Verfahren nach Anspruch 1, wobei die Zusammensetzung B NaCl in einer Konzentration von wenigstens 6 % (Gew./Vol.), bevorzugt von wenigstens 7 % (Gew./Vol.), bevorzugter von wenigstens 10 % (Gew./Vol.), noch bevorzugter von wenigstens 12 % (Gew./Vol.) und am meisten bevorzugt von wenigstens 15 % (Gew./Vol.), jeweils bezogen auf das Gesamtvolumen von Zusammensetzung B umfasst.

3. Verfahren nach einem der Ansprüche 1 bis 2, wobei die Zusammensetzung B wenigstens 0,5 mg/l Formiat und/oder 0,5 mg/l Phenol und/oder 0,5 mg/l Nitrobenzol und/oder 0,5 mg/l 4,4'-Methylendianilin (MDA) und/oder 0,5 mg/l Anilin umfasst.

4. Verfahren nach einem der Ansprüche 1 bis 3, wobei die Zusammensetzung B ferner ein Substrat umfasst, das das Wachstum der Haloferax mediterranei-Zellen ermöglicht, insbesondere wobei das Substrat zu Zusammensetzung B gegeben wurde, es sich bei dem Substrat bevorzugt um ein Kohlenhydrat, insbesondere Glycerin, einen Zucker wie Glucose oder Saccharose oder eine organische Säure wie Acetat, Lactat, Malat, Succinat oder Citrat handelt.

5. Verfahren nach Anspruch 1 bis 4, wobei die Inkubation in Schritt (c) bei einer Temperatur von 18°C bis 55°C durchgeführt wird und/oder wobei die Inkubation in Schritt (c) bei einem pH-Wert im Bereich von 6,0 bis 8,2, bevorzugt im Bereich von 6,2 bis 7,6, durchgeführt wird.

6. Verfahren nach Anspruch 1 bis 5, wobei die Inkubation in Schritt (c) unter aeroben Bedingungen durchgeführt wird.

7. Verfahren nach einem der Ansprüche 1 bis 6, wobei es sich bei den Haloferax mediterranei-Zellen um Haloferax mediterranei-DSM.1411-Zellen handelt.

8. Verfahren nach einem der Ansprüche 1 bis 7, wobei der Gesamtgehalt des wenigstens einen Schadstoffs um wenigstens 30 %, wenigstens 50 %, wenigstens 70 % oder insbesondere von wenigstens 90 % oder von wenigstens 95 % verringert wird.

9. Verfahren nach einem der Ansprüche 1 bis 8, wobei das Verfahren ferner die Trennung der Zellen von Zusammensetzung B umfasst, wodurch Zusammensetzung C erhalten wird, und gegebenenfalls wobei das Verfahren ferner Konzentrieren von Zusammensetzung C umfasst, wodurch Zusammensetzung C* erhalten wird.

10. Verfahren nach Anspruch 9, wobei das Verfahren ferner das Entfernen anorganischer Komponenten aus Zusammensetzung C oder C*, insbesondere von Spurenelementen und/oder Salzen von Medienkomponenten umfasst.

11. Verfahren zur Herstellung Chlor und Natriumhydroxid, umfassend die Schritte
(i) Bereitstellen einer Zusammensetzung C oder C* gemäß dem Verfahren nach Anspruch 9 oder 10 und
(ii) Durchführen eines Natriumchloridelektrolyseprozesses an der Zusammensetzung gemäß (a), wodurch Chlor und Natriumhydroxid und gegebenenfalls Wasserstoff produziert wird.

12. Verfahren nach Anspruch 11, wobei die Natriumchloridelektrolyse aus Membranzellen-Elektrolyse von Natriumchlorid, insbesondere Membran-Elektrolyse unter Verwendung von Sauerstoff verbrauchenden Elektroden, und Diaphragmazellen-Elektrolyse von Natriumchlorid ausgewählt ist.

13. Verwendung von Haloferax mediterranei-Zellen zur Verringerung des Gehalts wenigstens eines aus der Gruppe bestehend aus Nitrobenzol, Formiat, Phenol, Methylendianilin, insbesondere 4,4'-Methylendianilin (MDA) und Anilin ausgewählten Schadstoffs in hypersalinem Abwasser, wobei das hypersaline Abwasser aus der Herstellung von Diarylcarbonat, der Herstellung von Polycarbonaten oder der Herstellung von Diaminen und Polyaminen der Diphenylmethanreihe stammt und mit Rücksicht darauf, dass das hypersaline Abwasser NaCl in einer Konzentration von wenigstens 6 % (Gew./Vol.) bis zu 25 % (Gew./Vol.) bezogen auf das Gesamtvolumen des hypersalinen Abwassers umfasst.

14. Zusammensetzung, umfassend hypersalines Abwasser mit einer NaCl-Konzentration von wenigstens 6 % (Gew./Vol.) bis zu 25 % (Gew./Vol.) bezogen auf das Gesamtvolumen des hypersalinen Abwassers, wenigstens einen aus der Gruppe bestehend aus Nitrobenzol, Formiat, Phenol, Methylendianilin, insbesondere 4,4'-Methylendianilin (MDA) und Anilin ausgewählten Schadstoff und Haloferax mediterranei-Zellen, mit Rücksicht darauf, dass das hypersaline Abwasser aus der Herstellung von Diarylcarbonat, der Herstellung von Polycarbonaten oder der Herstellung von Diaminen und Polyaminen der Diphenylmethanreihe stammt.

## Revendications

1. Procédé pour la réduction de la teneur d'au moins un polluant choisi dans le groupe constitué par un nitrobenzène, un formiate, un phénol, une méthylènedianiline, en particulier la 4,4'-méthylènedianiline (MDA), et une aniline, dans des eaux usées hypersalines, lesdites eaux usées hypersalines étant issues d'une production de diarylcarbonate, d'une production de polycarbonates ou d'une production de diamines et de polyamines de la série du diphénylméthane et, lesdites eaux usées hypersalines comprenant du NaCl en une concentration d'au moins 6 % (p/v) jusqu'à 25 % (p/v) sur la base du volume total des eaux usées hypersalines, ledit procédé comprenant les étapes de :
(a) fourniture d'une composition A comprenant des eaux usées hypersalines et ledit au moins un polluant, et
(b) mise en contact de la composition A avec des cellules d'Haloferax mediterranei, générant ainsi une composition B comprenant ladite composition A et des cellules d'Haloferax mediterranei, et
(c) incubation de la composition B, réduisant ainsi la teneur dudit au moins un polluant.

2. Procédé selon la revendication 1, ladite composition B comprenant du NaCl en une concentration d'au moins 6 % (p/v), préférablement d'au moins 7 % (p/v), plus préférablement d'au moins 10 % (p/v), encore plus préférablement d'au moins 12 % (p/v), et le plus préférablement d'au moins 15 % (p/v) sur la base du volume total de la composition B.

3. Procédé selon l'une quelconque des revendications 1 à 2, ladite composition B comprenant au moins 0,5 mg/l de formiate et/ou 0,5 mg/l de phénol et/ou 0,5 mg/l de nitrobenzène et/ou 0,5 mg/l de 4,4'-méthylènedianiline (MDA) et/ou 0,5 mg/l d'aniline.

4. Procédé selon l'une quelconque des revendications 1 à 3, ladite composition B comprenant en outre un substrat qui permet la croissance des cellules d'Haloferax mediterranei, en particulier, ledit substrat ayant été ajouté à la composition B, préférablement ledit substrat étant un glucide, en particulier le glycérol, un sucre tel que le glucose ou le saccharose ou un acide organique tel que l'acétate, le lactate, le malate, le succinate ou le citrate.

5. Procédé selon les revendications 1 à 4, l'incubation dans l'étape (c) étant réalisée à une température de 18 °C à 55 °C et/ou l'incubation dans l'étape (c) étant réalisée à une valeur de pH dans la plage de 6,0 à 8,2, préférablement dans la plage de 6,2 à 7, 6.

6. Procédé selon les revendications 1 à 5, ladite incubation dans l'étape (c) étant réalisée dans des conditions aérobes.

7. Procédé selon l'une quelconque des revendications 1 à 6, les cellules d'Haloferax mediterranei étant des cellules d'Haloferax mediterranei DSM.1411.

8. Procédé selon l'une quelconque des revendications 1 à 7, la teneur totale de l'au moins un polluant étant réduite d'au moins 30 %, d'au moins 50 %, d'au moins 70 % ou en particulier d'au moins 90 % ou d'au moins 95 %.

9. Procédé selon l'une quelconque des revendications 1 à 8, ledit procédé comprenant en outre la séparation des cellules de la composition B, donnant ainsi une composition C, et éventuellement, le procédé comprenant en outre la concentration de la composition C, donnant ainsi une composition C*.

10. Procédé selon la revendication 9, ledit procédé comprenant en outre l'élimination de composants inorganiques de la composition C ou C*, en particulier d'éléments en trace et/ou de sels de composants de milieu.

11. Procédé pour la production de chlore et d'hydroxyde de sodium, comprenant les étapes de
(i) fourniture d'une composition C ou C* selon le procédé selon la revendication 9 ou 10, et
(ii) soumission de la composition selon (a) à un processus d'électrolyse de chlorure de sodium, produisant ainsi du chlore et de l'hydroxyde de sodium et éventuellement de l'hydrogène.

12. Procédé selon la revendication 11, l'électrolyse de chlorure de sodium étant choisie parmi une électrolyse à cellule à membrane du chlorure de sodium, en particulier une électrolyse à membrane utilisant des électrodes consommant de l'oxygène et une électrolyse à cellule à diaphragme du chlorure de sodium.

13. Utilisation de cellules d'Haloferax mediterranei pour la réduction de la teneur d'au moins un polluant choisi dans le groupe constitué par un nitrobenzène, un formiate, un phénol, une méthylènedianiline, en particulier la 4,4'-méthylènedianiline (MDA), et une aniline, dans des eaux usées hypersalines, les eaux usées hypersalines étant issues d'une de la production de diarylcarbonate, de la production de polycarbonates ou de la production de diamines et de polyamines de la série du diphénylméthane et, tandis que les eaux usées hypersalines comprennent du NaCl en une concentration d'au moins 6 % (p/v) jusqu'à 25 % (p/v) sur la base du volume total des eaux usées hypersalines.

14. Composition comprenant des eaux usées hypersalines dotées d'une concentration en NaCl d'au moins 6 % (p/v) jusqu'à 25 % (p/v) sur la base du volume total des eaux usées hypersalines, au moins un polluant choisi dans le groupe constitué par un nitrobenzène, un formiate, un phénol, une méthylènedianiline, en particulier la 4,4'-méthylènedianiline (MDA), et une aniline, et des cellules d'Haloferax mediterranei, tandis que lesdites eaux usées hypersalines sont issues de la production de diarylcarbonate, de la production de polycarbonates ou de la production de diamines et de polyamines de la série du diphénylméthane.
